# EUROPÄISCHE PATENTSCHRIFT

(11) **EP 3 067 481 B1**
(45) Veröffentlichungstag und Bekanntmachung des Hinweises auf die Patenterteilung: **02.09.2026**
(21) Anmeldenummer: 16162789.8
(22) Anmeldetag: 29.07.2012
(51) Int. Cl.: E04B 1/68, C09J 7/22, C09J 7/30, E06B 1/62

(54) **FOLIENBAND**
FILM STRIP
BANDE DE FEUILLE

(43) Veröffentlichungstag der Anmeldung: 14.09.2016
(62) Dokumentnummer(n) der früheren Anmeldung(en) nach Art. 76 EPÜ: 12005517.3 / 2 692 959
(73) Patentinhaber: Hanno-Werk GmbH & Co. KG, 30880 Laatzen (DE)
(72) Erfinder: Hohlfeld, Andreas, 31832 Springe (DE); Kethorn, Björn, 48346 Ostbevern (DE); Fehrmann, Markus, 31141 Hildesheim (DE); Hoffmann, Hans J., 31157 Sarstedt (DE)
(74) Vertreter: Patentanwälte Thömen & Körner

(56) Entgegenhaltungen:
- EP-A1- 1 120 502
- WO-A1-2005/012681
- WO-A1-2009/127819
- DE-A1- 10 122 882
- DE-A1- 10 239 985
- DE-A1- 10 255 598
- DE-U1- 202008 011 429

## Beschreibung

Die vorliegende Erfindung betrifft ein Folienband.

Folienbänder sind zum Abdichten von Fugen zwischen zusammengefügten Bauelementen im Hausbau bekannt und werden nach RAL, Leitfaden zur Planung und Ausführung der Montage von Fenstern und Haustüren, März 2010, Kap.6.4.4, auch als Fugendichtbänder bezeichnet. Abzudichtende Fugen im Hausbau werden auch als Bauanschlussfugen bezeichnet und finden sich beispielsweise zwischen einem Mauerwerk und einem Fenster- oder Türrahmen. Bekannte Folienbänder sind üblicherweise aus mehreren Lagen aufgebaut und weisen im Bereich der einen Längsseite einen schmalen Selbstklebestreifen auf, mit dem das Folienband mit dem einen Längsseitenbereich am Fenster- oder Türrahmen angeschlossen bzw. angeklebt wird. Anschließend wird das Folienband mit dem anderen Längsseitenbereich am Mauerwerk angeschlossen. Das Mauerwerk kann beispielsweise eine Außenwand oder eine Fassade sein. Der Anschluss erfolgt hierbei üblicherweise mittels eines separat auf das Mauerwerk aufgebrachten pastösen Klebers, insbesondere einer Acrylatklebemasse oder eines MS-Polymers. Der Anschluss kann aber auch bekanntermaßen durch einen wechselseitig aufgetragenen schmalen Klebestreifen oder durch einen Butylklebestreifen oder durch eine Klebemasse erfolgen.

Bekannte Folienbänder gibt es in verschiedenen Ausführungen. So gibt es Folienbänder, die für die Abdichtung von Fugen sowohl für den Innenbereich, also in Richtung Innenraum bzw. Raumluft, als auch für den Außenbereich, also in Richtung Außenraum oder Außenluft, geeignet sind. Solche Folienbänder weisen einen Selbstklebestreifen mit Folienabdeckung zum Verkleben auf dem Fensterrahmen auf und sind so ausgebildet, dass deren Dampfdurchlässigkeit im feuchten Zustand deutlich höher ist als im trockenen Zustand. Die Folienbänder haben also einen variablen s_{d}-Wert. Unter einem s_{d}-Wert wird der WasserdampfDiffusionswiderstand eines Materials, auch als "diffusionsäquivalente Luftschichtdicke" bezeichnet, verstanden. Der s_{d}-Wert mit der Einheit "m" berechnet sich aus der Schichtdicke des Materials multipliziert mit der Wasserdampfdiffusionswiderstandszahl des Materials, dem so genannten µ-Wert, wie in DIN EN ISO 12572:2001 definiert.

Weiterhin gibt es Folienbänder, die speziell für die Abdichtung von Fugen gegenüber dem Innenbereich ausgebildet sind. Solche Folienbänder weisen einen Selbstklebestreifen mit Folienabdeckung zum Verkleben auf dem Fensterrahmen auf und sind als luftdichte und dampfdiffusionshemmende Folien-Vlies-Kombination ausgebildet. Auch gibt es Folienbänder, die speziell für die Abdichtung von Fugen gegenüber dem Außenbereich ausgebildet sind. Solche Folienbänder weisen ebenfalls einen Selbstklebestreifen mit Folienabdeckung zum Verkleben auf dem Fensterrahmen auf und sind als dampfdiffusionsoffene Folien-Vlies-Kombination ausgebildet.

Ebenso bekannte Folienbänder sind vlieskaschierte oder aluminiumbeschichtete Butylbänder, die luftdicht und diffusionshemmend, bzw. diffusionsdicht sowie 1-seitig oder 2-seitig klebend ausgeführt sind. Für die elastische Fugenabdichtung im Außenbereich sind zudem Folienbänder aus diffusionsdichtem EPDM bekannt, die mit einem Selbstklebestreifen ausgeführt sein können oder mit einem separaten Kleber am Mauerwerk anschließbar sind.

Aus der DE 101 22 882 B4 ist ein selbstklebendes Band zum Abdichten von Fugen bekannt, das eine Trägerschicht auf der Bandoberseite und eine auf der Bandunterseite vorgesehene Klebeschicht, welche mit einer abziehbaren Deckfolie versehen ist, aufweist. Das Band zeigt einen seitlichen Längsabschnitt, in welchem die Trägerschicht und die Klebeschicht perforiert sind. Durch die Perforation soll die Klebehaftung des Bandes beim Uberputzen verbessert werden.

DE 102 55 598 A1 offenbart ein selbstklebendes Dichtungsband zum Abdichten von Fenster- oder Türstöcken gegen Wandflächen eines Gebäudes, mit einer Trägerschicht und mit zwei in Querrichtung voneinander beabstandeten, unterschiedlich breiten und in Längsrichtung verlaufenden Selbstklebestreifen.

EP 1 120 502 A1 offenbart ein selbstklebendes Dichtungsband zum Abdichten von Fenster- oder Türstöcken gegen Wandflächen eines Gebäudes, mit einem bandförmigen Trägermaterial, auf welchem einseitig über die ganze Breite ein Kleber aufgebracht ist.

Ausgehend von diesem Stand der Technik liegt der Erfindung die Aufgabe zugrunde, eine Alternative zu den bekannten Folienbändern bereitzustellen, das die an Folienbändern Anforderungen hinsichtlich der Schlagregendichtheit, der Dampfdiffusionsoffenheit und der Luftdichtheit erfüllt, das einfach herstellbar und zudem in seiner Gesamtheit schneller, einfacher und kostengünstiger als vorhandene Produkte im Markt montierbar ist.

Diese Aufgabe wird mit einem Folienband gelöst, welches die in Anspruch 1 genannten Merkmale aufweist. Weiterbildungen und vorteilhafte Ausgestaltungen der Erfindung ergeben sich aus der nachfolgenden Beschreibung sowie den Unteransprüchen.

Ein solches Folienband stellt eine Alternative zu den bekannten Folienbändern dar und gewährleistet eine sichere und vollflächige Abdichtung von Fugen zwischen zusammengefügten Bauelementen im Hausbau, insbesondere von Fugen zwischen Mauerwerk und Fenster- oder Türrahmen.

Besonders geeignete Funktionsmembranen sind beispielsweise in der DE19514420 C1, der WO 9633321 A1, der DE 10 2010 054 110 A1 oder der DE 10239985 B4 als Materialien mit einem von der Umgebungsfeuchte abhängigen Wasserdampfdiffusionswiderstand offenbart.

Weitere geeignete Funktionsmembranen sind beispielsweise in der DE 102008037292 A1 oder der WO 2010017947 A2 als feuchteadaptive Funktionsschichten offenbart.

Es kann von Vorteil sein, wenn der schmalere Selbstklebestreifen im Bereich der einen Längsseite der Funktionsmembran angeordnet ist, und der breitere Selbstklebestreifen im Bereich der anderen Längsseite der Funktionsmembran angeordnet ist.

Es kann vorteilhaft sein, wenn die feuchtevariable Polymerfolie derart ausgebildet ist, dass sich deren Wasserdampfdiffusionskoeffizient und deren s_{d}-Wert mit steigender relativer Luftfeuchte verringern.

Ein erfindungsgemäßes Folienband ist universell für die Abdichtung einer Fuge zwischen zwei zusammengefügten Bauelementen, beispielsweise zwischen einem Baukörper, insbesondere einem Mauerwerk, und einem Rahmen oder dergleichen, insbesondere einem Fenster- oder Türrahmen, einsetzbar. Ist die Funktionsmembran zudem als feuchtevariable Polymerfolie ausgebildet, kann das Folienband sowohl für den Innenbereich als auch für den Außenbereich eingesetzt werden. Somit ist nur ein Folienband erforderlich, was auch die Lagerhaltung für den Fachhandel und den Montagebetrieb deutlich erleichtert und Fehler in der Anwendung vermeidet.

Es hat sich zudem als vorteilhaft herausgestellt, dass ein solches, einmal angeschlossenen Folienband während eines Bauvorhabens seine Eigenschaft von einer abdichtenden Funktion im Außenbereich in eine abdichtende Funktion im Innenbereich ändern kann.

Während einer ersten Bauphase, beispielsweise beim Einbau eines Fensters in eine Mauerwerksöffnung, kann das Folienband eine äußere Abdichtung der zwischen den Bauelementen ausgebildeten Fuge sicherstellen, wobei aufgrund der in dieser Bauphase vorhanden hohen relativen Luftfeuchtigkeit der s_{d}-Wert der Funktionsmembran niedrig und das Folienband damit diffusionsoffen ausgebildet ist, derart, dass das Haus oder Bauwerk austrocknen kann. Dasselbe Folienband stellt dann während bzw. nach einer zweiten Bauphase eine innere Abdichtung der zwischen den genannten Bauelementen ausgebildeten Fuge, beispielsweise nach Anbringen eines mit separater Abdichtung versehenen Wärmedämmverbundsystems, sicher, wobei aufgrund der in dieser Bauphase vorhanden geringeren relativen Luftfeuchtigkeit der s_{d}-Wert der Funktionsmembran höher und das Folienband damit diffusionshemmend ausgebildet ist.

Es kann zweckmäßig sein, wenn die Funktionsmembran so ausgebildet ist, dass diese bei einer mittleren relativen Feuchte der sie umgebenden Atmosphäre von mehr als 80 % einen Wasserdampfdiffusionswiderstand (s_{d}-Wert) von kleiner 1 m diffusionsäquivalente Luftschichtdicke aufweist.

Es kann zweckmäßig sein, wenn die Funktionsmembran so ausgebildet ist, dass diese bei einer mittleren relativen Feuchte der sie umgebenden Atmosphäre von 60 bis 80 % einen Wasserdampfdiffusionswiderstand (s_{d}-Wert) von kleiner oder gleich 5 m diffusionsäquivalente Luftschichtdicke aufweist, wobei dieser Wasserdampfdiffusionswiderstand (s_{d}-Wert) jedenfalls höher ist als der Wasserdampfdiffusionswiderstand (s_{d}-Wert), der sich bei der gleichen Funktionsmembran bei einer mittleren relativen Feuchte der sie umgebenden Atmosphäre von mehr als 80 % einstellt.

Es kann zweckmäßig sein, wenn die Funktionsmembran so ausgebildet ist, dass diese bei einer mittleren relativen Feuchte der sie umgebenden Atmosphäre von 30 bis unter 60 % einen Wasserdampfdiffusionswiderstand (s_{d}-Wert) von kleiner oder gleich 15 m diffusionsäquivalente Luftschichtdicke aufweist, wobei dieser Wasserdampfdiffusionswiderstand (s_{d}-Wert) jedenfalls höher ist als der Wasserdampfdiffusionswiderstand (s_{d}-Wert), der sich bei der gleichen Funktionsmembran bei einer mittleren relativen Feuchte der sie umgebenden Atmosphäre von 60 bis 80 % bestimmt wird.

Es kann zweckmäßig sein, wenn die Funktionsmembran so ausgebildet ist, dass diese bei einer mittleren relativen Feuchte der sie umgebenden Atmosphäre von unter 30 % einen Wasserdampfdiffusionswiderstand (s_{d}-Wert) von größer oder gleich 5 m diffusionsäquivalente Luftschichtdicke aufweist, wobei dieser Wasserdampfdiffusionswiderstand (s_{d}-Wert) jedenfalls höher ist als der größte Wasserdampfdiffusionswiderstand (s_{d}-Wert), der sich bei der gleichen Funktionsmembran bei einer mittleren relativen Feuchte der sie umgebenden Atmosphäre von 30 bis 70 % einstellt.

Eine geeignete Polyamid-Funktionsmembran ist beispielsweise so ausgebildet, dass diese bei einer mittleren relativen Feuchte der sie umgebenden Atmosphäre von 30 bis 50 % einen Wasserdampfdiffusionswiderstand (s_{d}-Wert) von 2 bis 5 m diffusionsäquivalente Luftschichtdicke und bei einer mittleren relativen Feuchte der sie umgebenden Atmosphäre von 60 bis 80 % einen Wasserdampfdiffusionswiderstand (s_{d}-Wert) von kleiner 1 m diffusionsäquivalente Luftschichtdicke aufweist.

Eine geeignete Ionomer-Funktionsmembran ist beispielsweise so ausgebildet, dass diese bei einer mittleren relativen Feuchte der sie umgebenden Atmosphäre von 72,5 % einen Wasserdampfdiffusionswiderstand (s_{d}-Wert) von 0,1 bis 5 m diffusionsäquivalente Luftschichtdicke und bei einer mittleren relativen Feuchte der sie umgebenden Atmosphäre von 25 % einen Wasserdampfdiffusionswiderstand (s_{d}-Wert) von 1 bis 10 m diffusionsäquivalente Luftschichtdicke aufweist.

Eine geeignete Funktionsmembran auf Polyamid-Basis ist beispielsweise so ausgebildet, dass diese bei einer mittleren relativen Feuchte der sie umgebenden Atmosphäre von größer 70 % einen Wasserdampfdiffusionswiderstand (s_{d}-Wert) von kleiner 0,8 bis kleiner 1 m diffusionsäquivalente Luftschichtdicke, bei einer mittleren relativen Feuchte der sie umgebenden Atmosphäre von 45 bis 58% einen Wasserdampfdiffusionswiderstand (s_{d}-Wert) von 2 bis 5 m diffusionsäquivalente Luftschichtdicke und bei einer mittleren relativen Feuchte der sie umgebenden Atmosphäre von kleiner 30 % einen Wasserdampfdiffusionswiderstand (s_{d}-Wert) von 20 m diffusionsäquivalente Luftschichtdicke aufweist.

Eine geeignete Funktionsmembran ist beispielsweise so ausgebildet, dass diese bei einer mittleren relativen Feuchte der sie umgebenden Atmosphäre von 25 % einen Wasserdampfdiffusionswiderstand (s_{d}-Wert) von 20 m diffusionsäquivalente Luftschichtdicke, bei einer mittleren relativen Feuchte der sie umgebenden Atmosphäre von 37,5 % einen Wasserdampfdiffusionswiderstand (s_{d}-Wert) von 11 m diffusionsäquivalente Luftschichtdicke, bei einer mittleren relativen Feuchte der sie umgebenden Atmosphäre von 50 % einen Wasserdampfdiffusionswiderstand (s_{d}-Wert) von 11 m diffusionsäquivalente Luftschichtdicke, bei einer mittleren relativen Feuchte der sie umgebenden Atmosphäre von 65,5 % einen Wasserdampfdiffusionswiderstand (s_{d}-Wert) von 2,7 m diffusionsäquivalente Luftschichtdicke, bei einer mittleren relativen Feuchte der sie umgebenden Atmosphäre von 80 % einen Wasserdampfdiffusionswiderstand (s_{d}-Wert) von 0,32 m diffusionsäquivalente Luftschichtdicke und bei einer mittleren relativen Feuchte der sie umgebenden Atmosphäre von 90 % einen Wasserdampfdiffusionswiderstand (s_{d}-Wert) von 0,16 diffusionsäquivalente Luftschichtdicke aufweist.

Der s_{d}-Wert wird nach DIN EN ISO 12572:2001 mittels DIN EN 1931:2000 bestimmt. Hierbei wird bei definierten Umgebungsluftfeuchtigkeiten "%rF" und definiertem Feuchtigkeitsgradienten zwischen einer Seite der Folie und der anderen die durchtretende Menge an Wasser pro Zeit gravimetrisch bestimmt und nach Norm Wasserdampfdiffusionswiderstandszahl (µ) und sd-Wert "m" bestimmt.

Es kann zweckmäßig sein, wenn auf der Oberseite der Funktionsmembran eine Vliesschicht, vorzugsweise mittels eines Heißschmelzklebers, vorzugsweise vollflächig aufgebracht ist.

Es kann auch von Vorteil sein, wenn auf der Unterseite der Funktionsmembran, vorzugsweise zwischen Funktionsmembran und Selbstklebestreifen, eine Vliesschicht, vorzugsweise mittels Heißschmelzklebers, vorzugsweise vollflächig aufgebracht ist.

Es kann vorteilhaft sein, wenn zumindest einer der Selbstklebestreifen derart ausgebildet sind, dass eine Verklebung der Funktionsmembran sowohl auf Mauerwerk, Beton, Stein und dergleichen als auch auf Kunststoff, Holz oder Metall herstellbar ist.

Es kann von Vorteil sein, wenn das Folienband positiv dehnbar ist, vorzugsweise derart, dass das Folienband in Querrichtung mit weniger Kraftaufwand dehnbar ist als in Längsrichtung, besonders bevorzugt derart, dass das Folienband in Querrichtung mehr bzw. weiter dehnbar ist als in Längsrichtung. Positive Dehnung bedeutet, dass sich die Abmessung des Folienbandes in Quer- bzw. Längsrichtung vergrößert.

Vorteilhaft kann die positive Dehnung bis 200 Prozent, vorzugsweise mehr als 5 Prozent betragen. Durch diese Dehnbarkeit der Folie können Fugenbewegungen aufgenommen werden, ohne dass die Funktionalität der Dichtfolie beeinträchtigt wird. Üblicherweise ist hier eine Dehnreserve in Form von Schlaufenbildung bei dem Einbau der Folienbänder vorzusehen, vgl. RAL Leitfaden zur Planung und Ausführung der Montage von Fenstern und Haustüren, März 2010, Kapitel 6.4.4, Seite 133 und Seite 135, Ziffer 6. Eine solche aufwendige und materialverbrauchende Dehnreserve wird erfindungsgemäß aufgrund der gegebenen Dehnbarkeit vermieden.

Die Dehnbarkeit wird nach DIN EN ISO 1798:2008 bestimmt. Hierbei wird ein definierter Prüfkörper, üblicherweise durch Ausstanzen mit einem normierten Stanzwerkzeug, in eine Zugprüfmaschine eingespannt und gedehnt. Gemessen werden die maximale Kraft und die maximale Ausdehnung bis zum Bruch bzw. Riss des Prüfkörpers in den Einheiten für den Bruch MPa bzw. in N/cm und für die Dehnung (Längenänderung des Prüfkörpers im Verhältnis zur Ausgangslänge) in %

Als Bruch bzw. Riss ist vorliegend der Bruch bzw. Riss der zuerst brechenden bzw. reißenden Lage definiert. Die Dehnbarkeit ist vorliegend definiert als die Dehnung bis zum Bruch bzw. Riss der zuerst brechenden bzw. reißenden Lage. So reißt beispielsweise das Vlies, während die Membran weiterhin dehnbar ist.

Bei einem geeigneten erfindungsgemäßen Folienband kann der Riss der ersten Schicht in Querrichtung beispielsweise bei 7 MPa bzw. 210% und in Längsrichtung beispielsweise bei 18 MPa bzw. 26% liegen.

Es kann von Vorteil sein, wenn die Dehnung der vlieskaschierten Funktionsmembran in Längsrichtung zwischen 0 und 50 %, vorzugsweise zwischen 20 und 30% beträgt. Es kann von Vorteil sein, wenn die Dehnung der vlieskaschierten Funktionsmembran in Querrichtung zwischen 100 und 300 %, vorzugsweise zwischen 150 und 240 % beträgt.

Es kann von Vorteil sein, wenn die Dehnung der reinen Funktionsmembran in Quer- und in Längsrichtung mehr als 300 % beträgt.

Es kann von Vorteil sein, wenn die Selbstklebestreifen aus einem Acrylathaftkleber bestehen, der vorzugsweise mit einem Auftragsgewicht von 80 bis 500 g/m², besonders bevorzugt von 110 bis 300 g/m², ganz besonders bevorzugt von 220 bis 250 g/m²**.**

Das Auftragsgewicht wird nach am Anmeldetag aktueller ISO 3801 bzw. DIN EN 12127:1997 bestimmt. Hierbei wird ein definierter und normkonformer Stanzkörper oder Ausschnitt mit 100 cm² Fläche hergestellt, gewogen und das Gewicht pro Fläche in "g/m²" berechnet.

Es kann zweckmäßig sein, wenn zumindest ein Selbstklebestreifen eine die positive Dehnung begrenzende Gittergewebeeinlage oder Vlieseinlage auweist.

Es kann vorteilhaft sein, wenn die Dicke der Funktionsmembran 20 bis 100 µm beträgt.

Es kann vorteilhaft sein, wenn die Dicke der Funktionsmembran mit aufkaschierter Vliesschicht 100 bis 500 µm, vorzugsweise 150 bis 400 µm, ganz vorzugsweise 250 bis 300 µm beträgt.

Es kann vorteilhaft sein, wenn die Dicke eines Selbstklebestreifens 100 bis 300 µm, vorzugsweise 170 bis 270 µm beträgt.

Es kann vorteilhaft sein, wenn die Dicke der Abdeckfolie 50 bis 100 µm, vorzugsweise 60 bis 80 µm beträgt.

Unter einer Deck- bzw. Abdeckfolie werden erfindungsgemäß auch Abdeckpapiere verstanden. Solche Abdeckfolien werden auch als Liner oder ganz allgemein als Schutz bezeichnet. Diese dienen dazu, die Selbstklebestreifen vor Schmutz und dergleichen zu schützen bzw. ein Auf- bzw. Abrollen des Folienbandes auch bei stark haftendem Kleber zu ermöglichen.

Die vorgenannten Dicken werden vorzugsweise DIN 53855 bestimmt. Dabei wird mittels eines normkonformen Dickentasters und einer Auflagefläche von 10 cm² mit in der Norm definiertem Andruck die Dicke des Prüfkörpers gemessen.

Nicht beanspruchte Ausgestaltungen von Folienbändern ergeben sich aus der Zeichnung. In dieser zeigen:
- Fig. 1: ein alternatives Folienband im Querschnitt in a) einer ersten Ausführungsform, b) einer zweiten Ausführungsform, c) einer dritten Ausführungsform, d) einer vierten Ausführungsform, e) einer fünften Ausführungsform und f) einer sechsten Ausführungsform,
- Fig. 2: das alternative Folienband gemäß Fig. 1 f) in Draufsicht auf dessen Unterseite
- Fig. 3: schematisch die Anordnung zweier Folienbänder im Innenbereich und im Außenbereich zur Fugenabdichtung,
- Fig. 4: schematisch die Anordnung eines Folienbandes im Außenbereich zur Fugenabdichtung während einer ersten Bauphase, und
- Fig. 5: schematisch die gleichbleibende Anordnung des Folienbandes gemäß Fig. 4, nunmehr allerdings im Innenbereich zur Fugenabdichtung während bzw. nach einer zweiten Bauphase.
Die in den Figuren dargestellten Gegenstände sind bereits in Verbindung mit der Bezugszeichenliste für den Fachmann ohne Weiteres verständlich. Werden in den Figuren gleiche Bezugsziffern verwendet, so bezeichnen diese gleiche Teile.

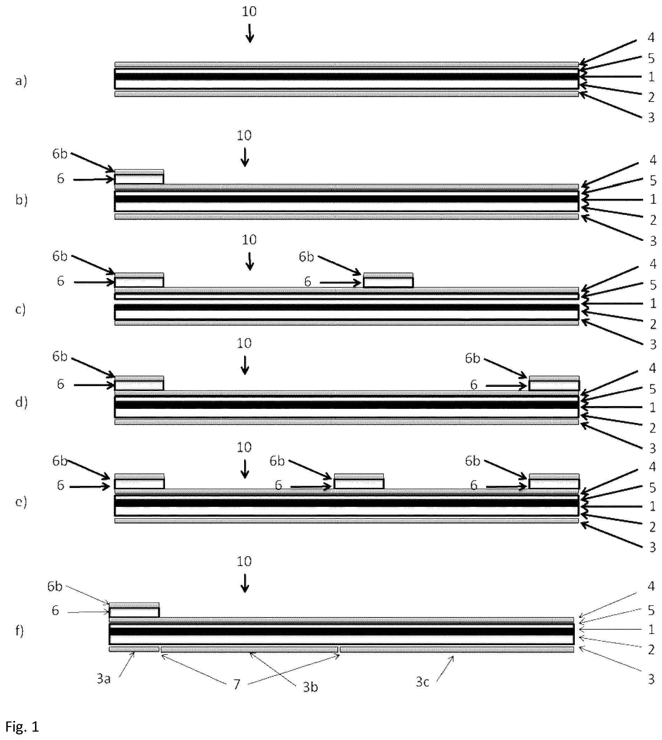

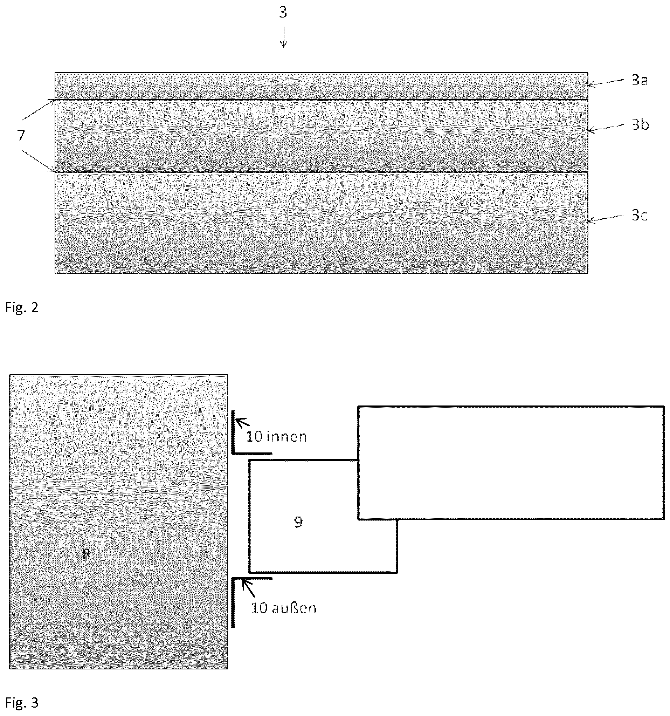

Fig. 1 zeigt ein Folienband 10 in sechs verschiedenen Ausgestaltungen. Das Folienband 10 zum Abdichten von Fugen zwischen einem in den Fig. 3 bis 5 dargestellten Mauerwerk 8 und einem in den Fig. 3 bis 5 dargestellten Fensterrahmen 9 umfasst eine durch eine nicht perforierte Folie gebildete Funktionsmembran 1, die auf ihrer Unterseite eine vollflächig aufgebrachte Selbstklebeschicht 2, welche mit einer abziehbaren Deckfolie 3 versehen ist, aufweist. Die Funktionsmembran 1 ist an dem in den Fig. 3 bis 5 dargestellten Fensterrahmen 9 über einen ersten in Längsrichtung verlaufenden Klebebereich der Selbstklebeschicht 2 anschließbar bzw. anklebbar. Die Funktionsmembran 1 ist an dem in den Fig. 3 bis 5 dargestellten Mauerwerk 8 über einen zweiten in Längsrichtung verlaufenden Klebebereich der Selbstklebeschicht 2 anschließbar bzw. anklebbar.

Auf der Oberseite der Funktionsmembran 1 ist eine Vliesschicht 4 mittels eines Heißschmelzklebers 5 vollflächig aufgebracht.

Damit das Folienband 10 nach dem Anschließen bzw. Ankleben auftretende Fugenbewegungen aufnimmt, ist dasselbe dehnbar ausgebildet, wobei die Dehnbarkeit in Querrichtung größer ist als in Längsrichtung.

Auf der Oberseite der Funktionsmembran 1, insbesondere auf der dort angeordneten Vliesschicht 4 sind keine (Ausgestaltung a) gemäß Fig. 1), ein (Ausgestaltung b) + f) gemäß Fig. 1), zwei (Ausgestaltung c) + d) gemäß Fig. 1) oder drei (Ausgestaltung e) gemäß Fig. 1) in Längsrichtung verlaufende Selbstklebestreifen 6, die jeweils mit einer abziehbaren Deckfolie 6b versehen sind, angeordnet. Vorzugsweise ist das Folienband 10 über einen dieser Selbstklebestreifen mit dem in den Fig. 3 bis 5 dargestellten Fensterrahmen 9 verklebbar.

Wie in Fig. 1. f) und Fig. 2 dargestellt kann die auf der Selbstklebeschicht 2 angeordnete abziehbare Abdeckfolie 3 mehrere in Längsrichtung verlaufende Perforationslinien 7 aufweisen, derart, dass vorgegebene in Längsrichtung verlaufende Abschnitte 3a, 3b, 3c der Abdeckfolie 3 getrennt voneinander abziehbar sind, vorzugsweise derart, dass derjenige in Längsrichtung verlaufende Abschnitt 3b der Abdeckfolie 3, der auf dem ersten Klebebereich angeordnet ist, separat von der Selbstklebeschicht 2 abziehbar ist.

Das Folienband 10 ist universell für die Abdichtung einer Fuge zwischen einem Mauerwerk und einem Fensterrahmen einsetzbar. Ist die Funktionsmembran 1 als feuchtevariable Polymerfolie ausgebildet, kann das Folienband 10 sowohl für den Innenbereich als auch für den Außenbereich, wie in Fig. 3 dargestellt, eingesetzt werden. Somit ist nur ein Folienband 10 erforderlich.

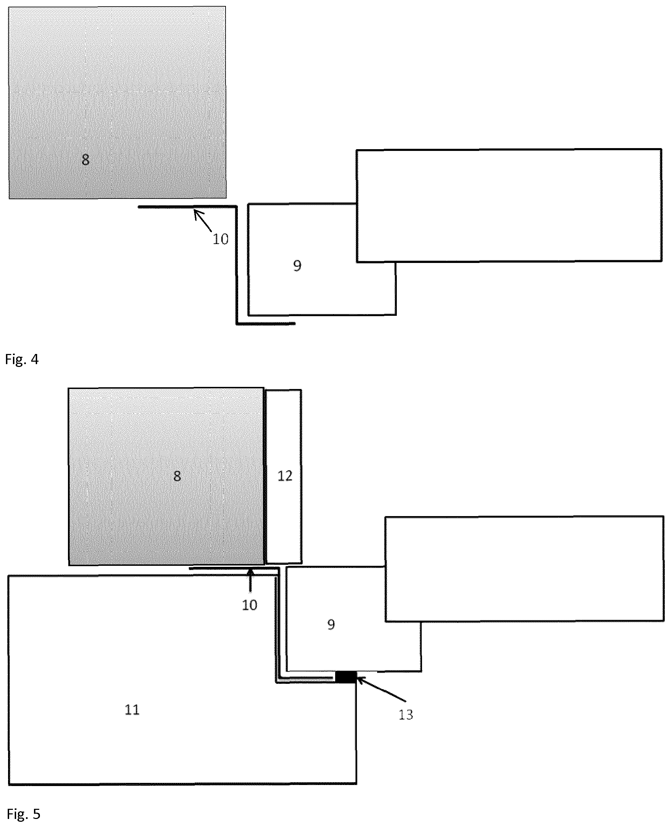

Es hat sich aber besonders vorteilhaft herausgestellt, dass ein solches, einmal angeschlossenes Folienband 10 während eines Bauvorhabens seine Eigenschaft von einer abdichtenden Funktion im Außenbereich, wie in Fig. 4 dargestellt, in eine abdichtende Funktion im Innenbereich, wie in Fig. 5 dargestellt, ändern kann.

Während einer ersten Bauphase, beispielsweise nach Fixierung eines Fensterrahmens 9 in einer Mauerwerksöffnung, kann das Folienband 10 eine äußere Abdichtung der zwischen den Bauelementen 8 und 9 ausgebildeten Fuge sicherstellen, wobei aufgrund der in dieser Bauphase vorhandenen hohen relativen Luftfeuchtigkeit der s_{d}-Wert der Funktionsmembran 1 niedrig und das Folienband 10 damit diffusionsoffen ausgebildet ist, derart, dass das Haus oder Bauwerk austrocknen kann, siehe Fig. 4. Dasselbe Folienband 10 stellt dann gemäß Fig. 5 während bzw. nach einer zweiten Bauphase eine innere Abdichtung der zwischen den genannten Bauelementen 8 und 9 ausgebildeten Fuge, beispielsweise nach Anbringen eines mit separater Abdichtung versehenen Wärmedämmverbundsystems 11 mit eigener Abdichtung 13, sicher, wobei aufgrund der in dieser Bauphase vorhandenen geringeren relativen Luftfeuchtigkeit der s_{d}-Wert der Funktionsmembran 1 höher und das Folienband 10 damit diffusionshemmend ausgebildet ist.

### Bezugszeichenliste

(ist Bestandteil der Beschreibung)
- 1: Funktionsmembran
- 2: Selbstklebeschicht
- 3: Abdeckfolie
- 4: Vliesschicht
- 5: Heißschmelzkleber
- 6: Selbstklebestreifen
- 6b: Abdeckfolie
- 7: Perforationslinie in Abdeckfolie 3
- 8: Mauerwerk
- 9: Fensterrahmen
- 10: Folienband
- 11: z.B. Wärmedämmverbundsystem
- 12: Putz
- 13: Dichtung WDVS

## Patentansprüche

1. Folienband (10) zum Abdichten von Fugen zwischen zusammengefügten Bauelementen im Hausbau, insbesondere zwischen einem Mauerwerk (8) und einem Fenster- oder Türrahmen (9), umfassend eine durch eine nicht perforierte Folie gebildete Funktionsmembran (1), die auf ihrer Unterseite nur zwei in Querrichtung voneinander beabstandete, unterschiedlich breite und in Längsrichtung verlaufende Selbstklebestreifen, welche jeweils mit einer abziehbaren Deckfolie versehen sind, und auf ihrer Oberseite keinen Selbstklebestreifen aufweist, wobei die Funktionsmembran (1) an dem ersten Bauelement, insbesondere am Fensteroder Türrahmen (9), über den schmaleren der Selbstklebestreifen und an dem zweiten Bauelement, insbesondere am Mauerwerk (8), über den breiteren der Selbstklebestreifen anzuschließen bzw. anzukleben ist, wobei die Funktionsmembran (1) gebildet ist durch nur eine Polymerfolie bestehend aus Polyethylen, Polypropylen, Polyamid, Polyurethan, Polyester, Polyethylenterephthalat oder einem Ionomer, oder vorzugsweise durch nur eine feuchtevariable Polymerfolie, deren Wasserdampfdiffusionskoeffizient sich in Abhängigkeit umgebenden Luftfeuchtigkeit ändert.

2. Folienband (10) nach Anspruch 1, **dadurch gekennzeichnet, dass** der schmalere Selbstklebestreifen im Bereich der einen Längsseite der Funktionsmembran (1) angeordnet sind, und dass der breitere Selbstklebestreifen im Bereich der anderen Längsseite der Funktionsmembran (1) angeordnet sind.

3. Folienband (10) nach Anspruch 1 oder 2, **dadurch gekennzeichnet, dass** die feuchtevariable Polymerfolie derart ausgebildet ist, dass sich deren Wasserdampfdiffusionskoeffizient und deren s_{d}-Wert mit steigender relativer Luftfeuchte verringern.

4. Folienband (10) nach einem der Ansprüche 1 bis 3, **dadurch gekennzeichnet, dass** auf der Oberseite der Funktionsmembran (1) eine Vliesschicht (4), vorzugsweise mittels eines Heißschmelzklebers (5), vorzugsweise vollflächig aufgebracht ist.

5. Folienband (10) nach einem der Ansprüche 1 bis 4, **dadurch gekennzeichnet, dass** auf der Unterseite der Funktionsmembran, vorzugsweise zwischen der Funktionsmembran und den Selbstklebestreifen, eine Vliesschicht (4), vorzugsweise mittels eines Heißschmelzklebers (5), vorzugsweise vollflächig aufgebracht ist.

6. Folienband (10) nach einem der Ansprüche 1 bis 5, **dadurch gekennzeichnet, dass** die Selbstklebestreifen derart ausgebildet sind, dass eine Verklebung der Funktionsmembran (1) sowohl auf Mauerwerk (8), Beton, Stein und dergleichen als auch auf Kunststoff, Holz oder Metall herstellbar ist.

7. Folienband (10) nach einem der Ansprüche 1 bis 6, **dadurch gekennzeichnet, dass** das Folienband (10) positiv dehnbar ist, vorzugsweise derart, dass das Folienband (10) in Querrichtung mit weniger Kraftaufwand dehnbar ist als in Längsrichtung, besonders bevorzugt derart, dass das Folienband (10) in Querrichtung mehr bzw. weiter dehnbar ist als in Längsrichtung.

8. Folienband (10) nach Anspruch 7, **dadurch gekennzeichnet, dass** die positive Dehnung bis 200 Prozent, vorzugsweise mehr als 5 Prozent beträgt.

9. Folienband (10) nach einem der Ansprüche 1 bis 8, **dadurch gekennzeichnet, dass** die Selbstklebestreifen (6) aus einem Acrylathaftkleber bestehen, der vorzugsweise mit einem Auftragsgewicht von 80 bis 500 g/m², besonders bevorzugt von 110 bis 300 g/m², ganz besonders bevorzugt von 220 bis 250 g/m² aufgebracht ist.

## Claims

1. Film tape (10) for sealing joints between joined structural elements in housebuilding, in particular between masonry (8) and a window frame or door frame (9), comprising a functional membrane (1) which is formed by a non-perforated film and the underside of which has only two self-adhesive strips of different widths, spaced from one another in the transverse direction and running in the longitudinal direction, each of which is provided with a peelable cover film, and the top side of which does not have any self-adhesive strips, wherein the functional membrane (1) is intended to be connected or bonded to the first structural element, in particular the window frame or door frame (9), via the narrower of the self-adhesive strips and to the second structural element, in particular the masonry (8), via the wider of the self-adhesive strips, wherein the functional membrane (1) is formed by only one polymer film consisting of polyethylene, polypropylene, polyamide, polyurethane, polyester, polyethylene terephthalate or an ionomer, or preferably by means of only one moisture-variable polymer film, the water vapour diffusion coefficient of which changes as a function of ambient air humidity.

2. Film tape (10) according to Claim 1, **characterized in that** the narrower self-adhesive strip is located in the region of the one longitudinal side of the functional membrane (1), and **in that** the wider self-adhesive strip is located in the region of the other longitudinal side of the functional membrane (1).

3. Film tape (10) according to Claim 1 or 2, **characterized in that** the moisture-variable polymer film is designed in such a way that its water vapour diffusion coefficient and its S_{d} value decrease as the relative air humidity increases.

4. Film tape (10) according to one of Claims 1 to 3, **characterized in that** a nonwoven layer (4) is applied, preferably over the entire surface area, to the top side of the functional membrane (1), preferably by means of a hot-melt adhesive (5).

5. Film tape (10) according to one of Claims 1 to 4, **characterized in that** a nonwoven layer (4) is applied, preferably over the entire surface area, preferably between the functional membrane and the self-adhesive strips, to the underside of the functional membrane, preferably by means of a hot-melt adhesive (5).

6. Film tape (10) according to one of Claims 1 to 5, **characterized in that** the self-adhesive strips are designed such that the adhesive bonding of the functional membrane (1) can be established both on masonry (8), concrete, stone and the like and on plastic, wood or metal.

7. Film tape (10) according to one of Claims 1 to 6, **characterized in that** the film tape (10) is positively extensible, preferably in such a way that the film tape (10) is extensible with less expenditure of force in the transverse direction than in the longitudinal direction, particularly preferably in such a way that the film tape (10) is extensible to a greater extent in the transverse direction than in the longitudinal direction.

8. Film tape (10) according to Claim 7, **characterized in that** the positive extensibility amounts to up to 200 percent, preferably more than 5 percent.

9. Film tape (10) according to one of Claims 1 to 8, **characterized in that** the self-adhesive strips (6) consist of an acrylic pressure-sensitive adhesive which is preferably applied with an application weight of 80 to 500 g/m², particularly preferably 110 to 300 g/m², very particularly preferably 220 to 250 g/m².

## Revendications

1. Bande de film (10) destinée à étanchéifier des joints entre des éléments de construction assemblés dans la construction de maisons, en particulier entre une maçonnerie (8) et un châssis de fenêtre ou de porte (9), comprenant une membrane fonctionnelle (1) formée par un film non perforé, qui, sur sa face inférieure, présente uniquement deux rubans autoadhésifs écartés l'un de l'autre dans une direction transversale, de largeurs différentes et s'étendant dans la direction longitudinale, qui sont chacun pourvus d'un film de recouvrement amovible, et qui, sur sa face supérieure, ne présente pas de ruban autoadhésif, la membrane fonctionnelle (1) étant à relier au premier élément de construction ou à coller sur celui-ci, en particulier au/sur le châssis de fenêtre ou de porte (9), par l'intermédiaire du ruban autoadhésif le plus étroit et au/sur le second élément de construction, en particulier à/sur la maçonnerie (8), par l'intermédiaire du ruban autoadhésif le plus large, la membrane fonctionnelle (1) étant formée par seulement un film polymère constitué de polyéthylène, polypropylène, polyamide, polyuréthane, polyester, poly(téréphtalate d'éthylène) ou par un ionomère ou de préférence par seulement un film polymère variable à l'humidité, dont le coefficient de diffusion de vapeur d'eau varie en fonction de l'humidité de l'air environnant.

2. Bande de film (10) selon la revendication 1, **caractérisée en ce que** le ruban autoadhésif le plus étroit est agencé dans la zone d'un côté long de la membrane fonctionnelle (1) et **en ce que** le ruban autoadhésif le plus large est agencé dans la zone de l'autre côté long de la membrane fonctionnelle (1).

3. Bande de film (10) selon la revendication 1 ou 2, **caractérisée en ce que** la feuille polymère variable à l'humidité est conçue de telle sorte que son coefficient de diffusion de vapeur d'eau et sa valeur s_{d} diminuent lorsque l'humidité relative de l'air augmente.

4. Bande de film (10) selon l'une des revendications 1 à 3, **caractérisée en ce qu'**une couche de non-tissé (4) est appliquée sur la face supérieure de la membrane fonctionnelle (1), de préférence au moyen d'un adhésif thermofusible (5), de préférence sur toute la surface.

5. Bande de film (10) selon l'une des revendications 1 à 4, **caractérisée en ce qu'**une couche de non-tissé (4) est appliquée sur la face inférieure de la membrane fonctionnelle, de préférence entre la membrane fonctionnelle et les rubans autoadhésifs, de préférence au moyen d'un adhésif thermofusible (5), de préférence sur toute la surface.

6. Bande de film (10) selon l'une des revendications 1 à 5, **caractérisée en ce que** les rubans autoadhésifs sont conçus de telle sorte qu'un collage de la membrane fonctionnelle (1) peut être réalisé aussi bien sur la maçonnerie (8), le béton, la pierre et analogues que sur la matière plastique, le bois ou le métal.

7. Bande de film (10) selon l'une des revendications 1 à 6, **caractérisée en ce que** la bande de film (10) peut être allongée positivement, de préférence de telle sorte que la bande de film (10) peut être allongée dans la direction transversale à l'aide de moins de force que dans la direction longitudinale, de manière particulièrement préférée de telle sorte que la bande de film (10) peut être allongée plus ou plus loin dans la direction transversale que dans la direction longitudinale.

8. Bande de film (10) selon la revendication 7, **caractérisée en ce que** l'allongement positif représente jusqu'à 200 %, de préférence plus de 5 %.

9. Bande de film (10) selon l'une des revendications 1 à 8, **caractérisée en ce que** les rubans autoadhésifs (6) sont constitués d'un autoadhésif d'acrylate, qui est appliqué de préférence à un poids surfacique de 80 à 300 g/m², de manière particulièrement préférée de 110 à 500 g/m², de manière tout particulièrement préférée de 220 à 250 g/m².
